# EUROPEAN PATENT APPLICATION

(11) **EP 3 193 003 A1**
(43) Date of publication of application: **19.07.2017**
(21) Application number: 16151493.0
(22) Date of filing: 15.01.2016
(51) Int. Cl.: F02K 1/76

(54) **THRUST REVERSER ACTUATION SYSTEM ARCHITECTURE**

(71) Applicant: Goodrich Actuation Systems Ltd., West Midlands B90 4LA (GB)
(72) Inventor: DAVIES, Stephen, Shropshire (GB)
(74) Representative: Hughes, Andrea Michelle

(57) **Abstract**

Thrust reverser actuation system (TRAS) architecture comprising a plurality of actuators (10a₁,10a₂,10a₃,10b₁,10b₂,10b₃) configured to drive flaps or cowls (9a,9b), inter-actuator shafts (11a₁,11a₂,11b₁,11b₂) connecting each pair of adjacent actuators associated with the flaps or cowls, and a corresponding plurality of motors (12a₁,12a₂,12a₃,12b₁,12b₂,12b₃), the system having a fully distributed motor configuration, i.e. having a single motor for each actuator. The efficiency of the drive between the motor and the actuator output to which it is connected is maximised, but the efficiency of the mechanical connection between adjacent actuators themselves is minimised (preferably less than 50%) resulting in low torque transfer between actuators.

## Description

The present invention is concerned with thrust reverser actuation systems for aircraft.

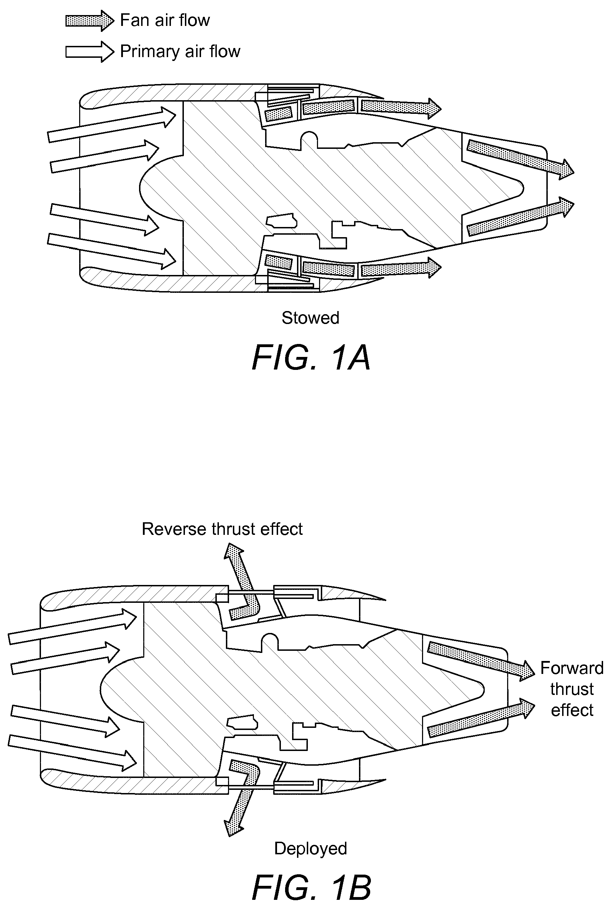

Modern aircraft include thrust reverser systems to assist in decelerating the aircraft on landing. Thrust reverser systems include one or more moveable cowls or thrust reverser doors provided on the aircraft nacelle. As can be seen in the schematic views of Figs. 1A and 1 B, the cowls are movable between a closed or stowed position and an open or deployed position.

In normal operation, the cowls are stored and secured such that air flows through the aircraft nacelle as shown by the arrows in Fig. 1A.

During landing, it is often necessary for the pilot to increase the deceleration of the aircraft and the thrust reverser system assists by deflecting some of the air flow and causing it to flow in an opposite direction.

To do this, the cowls are moved to the open or deployed position to divert some of the airflow as shown in Fig. 1 B. This enhances the braking effect of the other aircraft components such as landing gear brakes, flaps, spoilers, etc. as required on landing.

Actuators are used to move the cowls of the thrust reverser system between the stowed and deployed positions. Power to drive the actuators may be provided by hydraulic, pneumatic or electrical drive systems.

Traditionally, hydraulic systems have been used, but the aircraft industry is now moving towards the concept of more electric aircraft (MEA), using electric power to drive the actuators. Electric motors are therefore arranged to selectively drive the actuators as required.

Safety is, of course, of utmost consideration in aircraft and the reliability of the actuators to move the cowls must be guaranteed. There is, however, also a desire to minimise the size and weight of all aircraft components, including those used in the thrust reversal system.

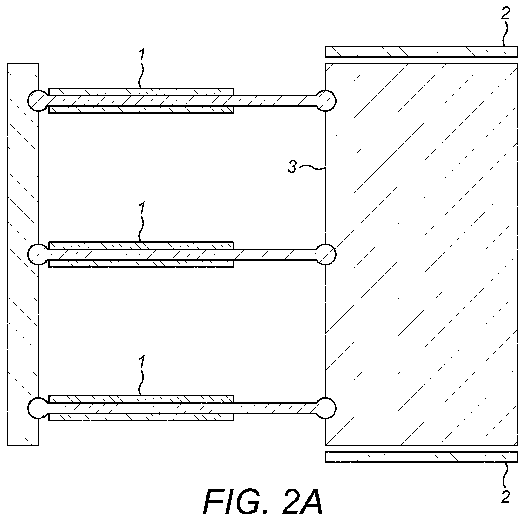

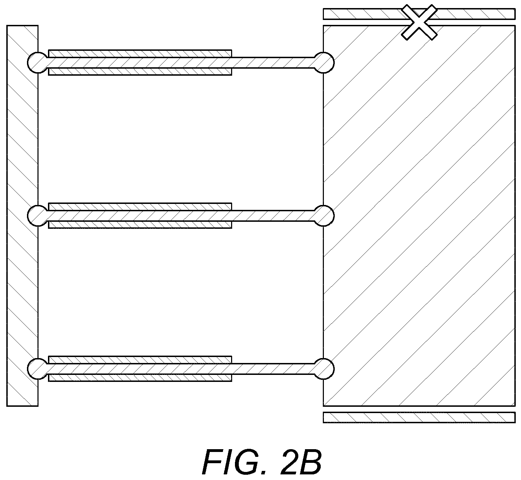

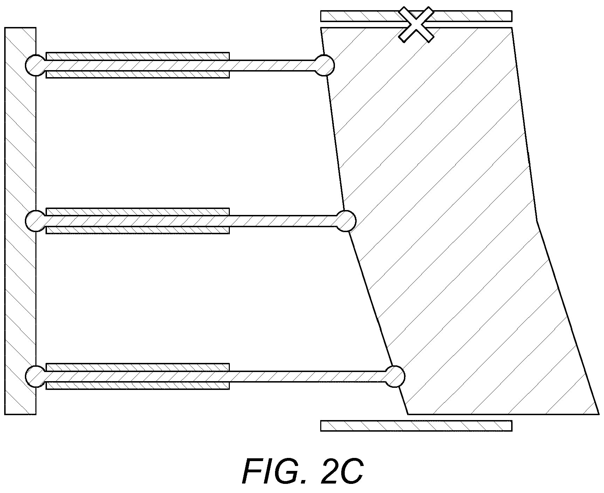

Mature actuation systems for thrust reverser systems use a set of mechanical actuators comprising a shaft movable within a sleeve and driven, usually hydraulically, to extend from the sleeve so as to drive a cowl attached to an end of the shaft, between guiding tracks. In the examples described below, three such actuators are attached to drive the cowls. It is, of course, possible to design systems with fewer or more actuators. A schematic view of an actuator drive system for a cowl is shown in Fig. 2A. In this simple system architecture the actuators 1 are not synchronised and act independently. A problem may occur, however, if one of the guiding tracks 2 along which the cowl 3 is driven, becomes blocked or jammed as indicated by the X in Fig. 2B. As the actuators continue to push the cowl, in isolation to each other, the cowl will skew as shown in Fig. 2C. The cowl must be designed to absorb the collective torque of individual actuator loads without rupture or damage. With such a system, to mitigate these problems, it would be necessary to increase the stiffness of the cowl resulting in increased weight for the cowl and for the entire nacelle.

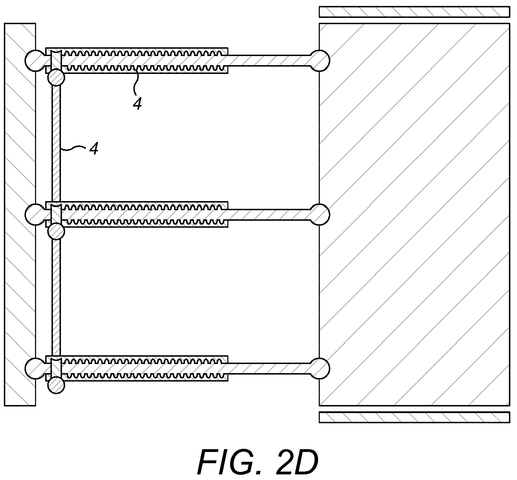

A known solution to this skew problem, to avoid the need for particularly stiff cowls, has been to provide mechanical synchronisation between the actuators as shown in Fig. 2D. With such systems, gearing and flexible shafting systems 4 are incorporated to mechanically couple the actuators. One such gear mechanism is described, for example, in US 2011/0296812. These systems traditionally incorporate acme nut/screws and worm/wheel gear reductions in order to mechanically couple the moving sleeve of the actuator with a rotating drive shaft, and flexible drive shafts that couple each rotating drive shaft.

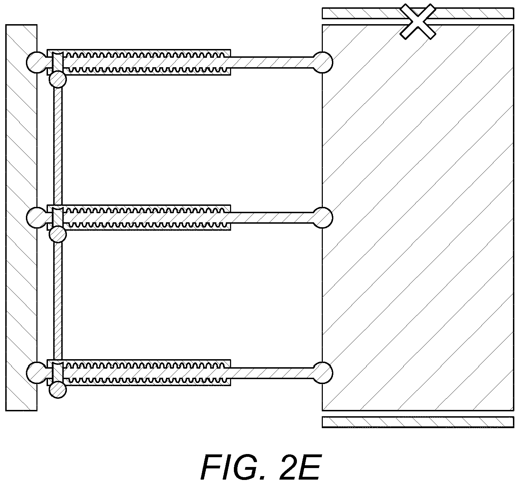

Such mechanical synchronisation of the actuators serves to reduce the above-described problem of skew in the event that a jam occurs in one of the guide tracks as indicated by the X in Fig.2E.

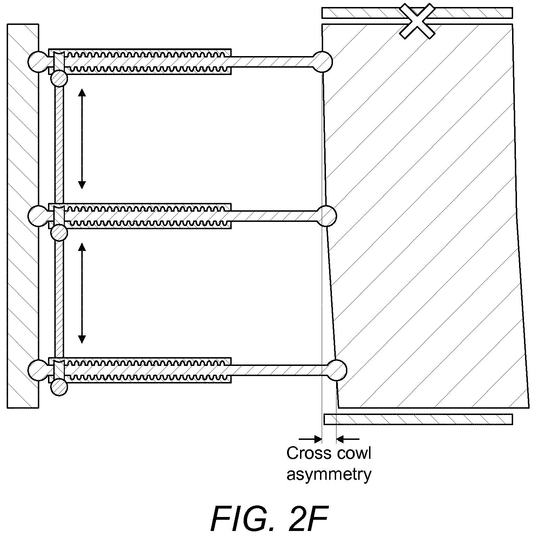

As can be seen in Fig. 2F, the stiffness of the synchronisation loop between the actuators limits the resultant asymmetry between actuator outputs in the event of a track jam. This facilitates a more lightweight cowl construction material as it is no longer required to provide cowls with inherent stiffness sufficient to manage a track jam and the loads imparted from non-synchronised actuators.

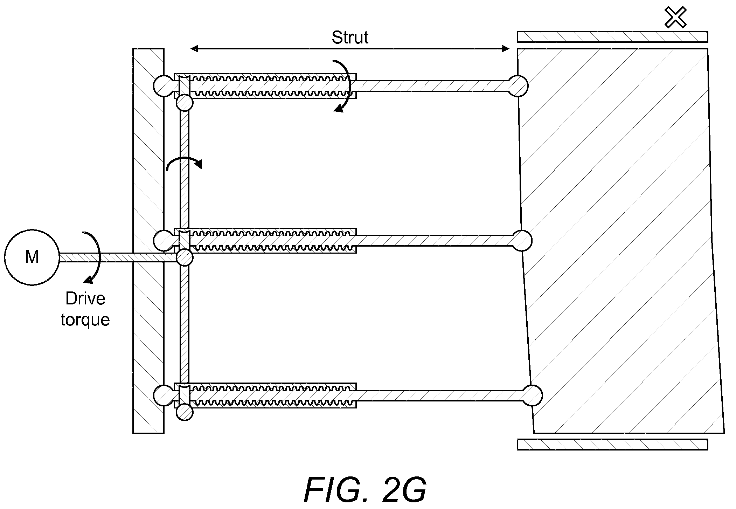

With any TRAS, the system components must be sized and arranged to ensure reliability even in cases of failure. A sizing case for actuators is the scenario of a track jam during deployment when the actuation system is almost but not quite reaching the position of full deployment. This subjects the actuator most adjacent to the jam to a high compressive (buckling) load and the actuator must be sized as a strut capable of withstanding this load. In this case the actuators must be sized to manage the compressive loads imparted onto their components as a result of the hydraulic pressure acting to deploy (compress) the actuator in combination with the compressive load generated by the synchronising systems between synchronised actuators which serves to translate the hydraulic force in each of the remaining actuators into a compressive force within the actuator adjacent to the jam as shown in Fig. 2G. If the TRAS is electrically powered, then the entire gear train and inter-actuator shafts from the motor to the actuator adjacent to the jam must be sized to accommodate the full stall torque of the motor drive. This all adds to the size and weight of the overall thrust reverser actuation system (TRAS).

In the case of an electrically powered TRAS, the drive motor itself must be sized to provide sufficient start-up torque to accelerate the inertia of all rotating components of the actuators, shafts and cowls and the actuators must be strong enough to contain the driving stall torque from a common motor in the event of, for example, a jam.

Conventional aircraft have two main types of TRAS configurations.

In one configuration, the cowls on each side of the engine are not mechanically linked and operate independently to each other. Each actuation system for each cowl would typically comprise a single electric motor arranged to drive all of the actuators connected to that particular cowl, via a mechanical power distribution system also serving to provide inter-actuator synchronisation as described above to prevent cowl skew.

Some aircraft also employ so-called linked cowls. Linked cowls can employ a centralised TRAS architecture in which a single motor can drive all of the actuators for both cowls.

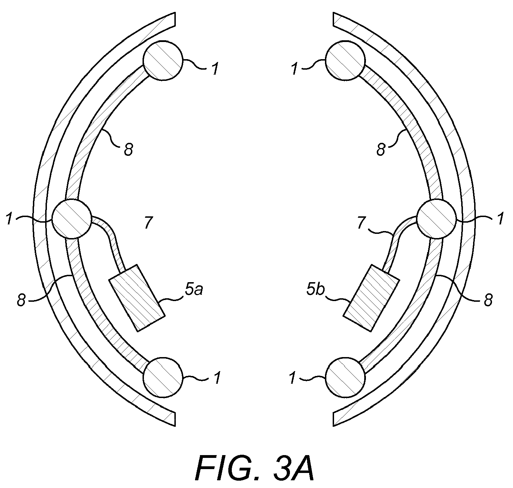

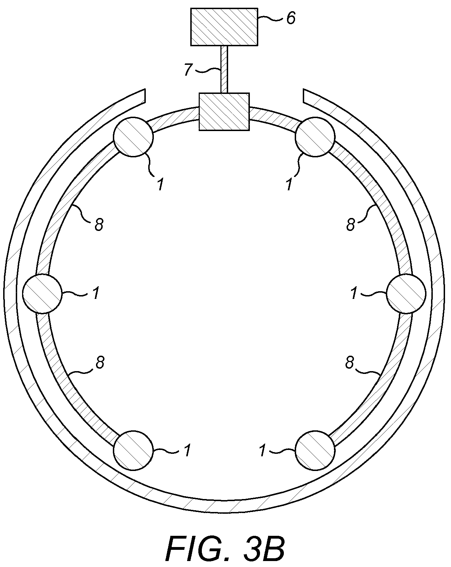

Figs. 3A and 3B show, respectively, an un-linked cowl and linked cowl TRAS architectures. In both cases, the drive motor must be sized and arranged to provide sufficient power or kVA to drive all of the actuators and to overcome the inertia of all of the components of the drive train. In the example shown in Fig. 3A, for example, the motor 5a, 5b must be capable of driving through the sum of three actuator loads and accelerating the sum of three actuator inertias. In the linked cowl example shown in Fig. 3B, the motor 6 must be capable of driving through the sum of six actuator loads and accelerating the sum of six actuator inertias. In each case, the actuators must each have sufficient buckling capability to individually accommodate the stall torque from the motor, in the event of failure of another actuator or track jam in the near fully deployed position, where the actuators are extended to their maximum strut length.

It can be seen, therefore, that with the prior art systems having a central motor 5a, 5b, 6 to drive a plurality of actuators 1, the components of the TRAS need to be designed to have sufficient capacity to contain motor stall torque.

In an electrically powered TRAS with a central motor or motor per cowl, the motor element has an output shaft 7 that is connected to the various actuators, and the actuators are linked by inter-actuator shafts 8. The efficiency of the drive train - i.e. from the motor output shaft through the inter-actuator shafts to the actuator outputs is typically very high, approaching 90%, utilising ball screw drives and bevel, face or spur geartrains or a combination thereof to achieve the desired efficiencies. In other words, the drive mechanism from motors to actuators is designed with maximum efficiency in order to minimise the system kVA- i.e. the linkage between the motor and the gearing and also the inter-actuator linkage must be highly efficient which is why the full motor torque is realised in the track jam case.

The present disclosure deals with the above problems by providing a TRAS architecture having a fully distributed motor configuration - i.e. having a single, smaller motor, for each actuator. The efficiency of the drive between the motor and the actuator output to which it is connected is maximised, but the efficiency of the mechanical connection between adjacent actuators themselves is minimised (preferably less than 50%) resulting in low torque transfer between actuators.

Preferred embodiments of the invention will now be described by way of example only, with reference to the accompanying drawings.
Fig. 1A and 1 B show how airflow is controlled by a thrust reverser system;
Figs. 2A to 2G illustrate, schematically, the prior art systems and the effect of a track jam;
Figs. 3A and 3B show, schematically, un-linked and linked cowl structures;
Fig. 4 shows a schematic view of a distributed motor configuration according to the present invention;
Fig. 5 shows how a system such as shown in Fig. 4 responds to a track jam.

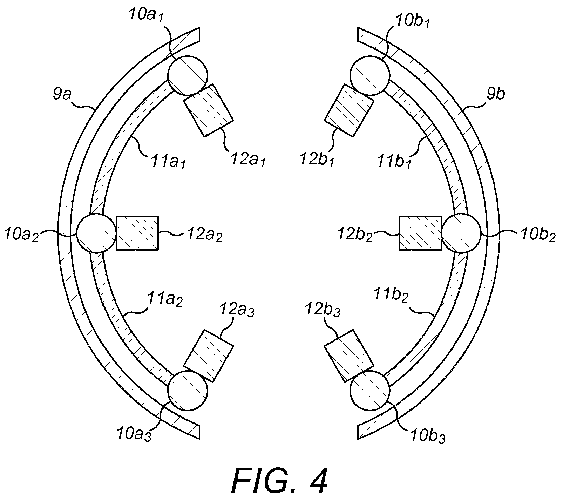

Fig. 4 shows a schematic view of an example of a fully distributed motor configuration according to the present disclosure.

In the example shown, each cowl 9a, 9b is driven by three actuators 10a₁, 10a₂, 10a₃; 10b₁, 10b₂, 10b₃. The actuators are connected by interactuator shafts 11a₁, 11a₂; 11b₁; 11b₂. Each actuator is driven by a respective motor 12a₁, 12a₂, 12a₃; 12b₁, 12b₂, 12b₃.

Since the power source is effectively distributed amongst the actuators by the fact of having a separate motor for each actuator, the inter-actuator shafts do not need to provide a power distribution function but, instead, solely provide a synchronising function during normal operation. Note, the inter-actuator shafts may serve to provide power distribution in the case of low speed, non-powered (manual) translation of the cowls in maintenance events.

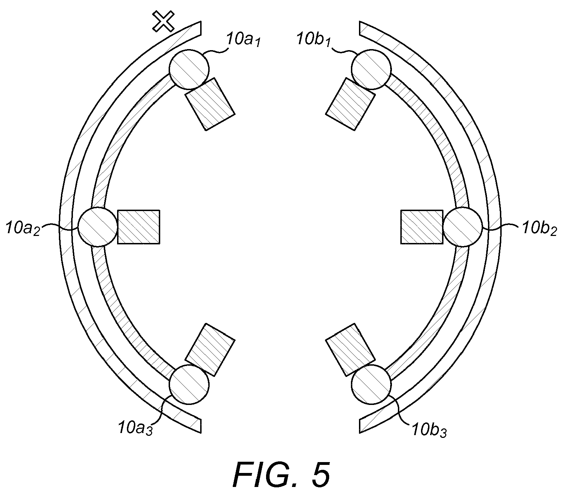

With the fully distributed arrangement, if a track jam occurs at the location indicated by X in Fig. 5, it can be seen that the effective torque reacted by the actuator 10a₁ adjacent to the cowl track jam is substantially reduced as compared to the prior art systems having a centralised motor. The inter-actuator efficiency is minimised by virtue of gear selection and gear design with the inter-actuator synchronisation system preferably using worm/wheel or helical gears and flexshaft drive shaft components. The inter actuator synchronisation system only requires to be reversible in static breakout and thus the efficiency of each gear set is minimised to this boundary condition , typically less than 50% between adjacent actuators.

This means that in the event of a jam such as shown in Fig. 5, the overall 'jam torque' would be the torque from the motor 12a₁ on the actuator 10a₁ adjacent to the jam location plus 50% of the torque from the adjacent motor 12a₁, plus 25% of the torque from the next adjacent motor 12a₃ - i.e. 1.75 of the torque of motor 12a₁. This, as compared to the prior art, is a jam torque reduction of around 60% (100*1.75/3). In the prior art systems, in such a situation, with a single motor driving 3 synchronised actuators, the jam torque would be in the order of three times the motor torque required for each actuator station because of the fact that only a single centralised motor drives all actuators assuming inter actuator drive efficiency to be 100%.

Because, in the event of a typical track jam, the torque reacted by the adjacent actuator 10a₁ is reduced, the resultant buckling load is reduced pro rata and it is therefore possible, in a system according to the invention, for the actuators to be significantly lighter in weight.

As a separate motor is provided for each actuator, the motors themselves can, of course, be smaller and provide less power.

Even when sizing the system for the event of a failure, the overall system can be substantially reduced in weight, without significant impact on reliability.

The invention combines high efficiency motor to output drive and low efficiency inter-actuator synchronisation drive in a manner that does not compromise normal operation cases but can provide more than 40% load reduction in fundamental sizing failure cases to the actuator components such as ball screws, gear boxes and structural connections.

Additionally, the efficiency losses incumbent on current torque distribution flexshafts are eliminated as the inter actuator shafts do not distribute motor torque to the actuator outputs. This in itself can result in a 10% reduction in the basic kVA demand of the overall system. Additionally, all gears from the motor to ball screw output drive can be deleted as the motor lies on the same axis as the ball screw.

## Claims

1. A thrust reverser actuation system comprising
a plurality of actuators arranged to drive, in use, a flap or cowl;
an inter-actuator shaft connecting each pair of adjacent actuators associated with the flap or cowl;
a corresponding plurality of motors, a respective motor connected to and arranged to drive each of said actuators.

2. A thrust reverser actuation system as claimed in claim 1, comprising a first plurality of said actuators arranged to drive, in use, a first flap or cowl, and a second plurality of said actuators arranged to drive, in use, a second flap or cowl.

3. A thrust reverser actuation system as claimed in claim 2, wherein said first plurality of actuators are not connected to, and operate independently of, said second plurality of actuators.

4. A thrust reverser actuation system as claimed in claim 2, wherein said first plurality of actuators are connected to, and operate in dependence on, said second plurality of actuators.

5. A thrust reverser actuation system as claimed in any preceding claim, wherein the or each plurality of actuators comprises three actuators.
